(19) **Europäisches Patentamt**

**European Patent Office**

**Office européen des brevets**

(11) **EP 0 963 691 B1**

(12) **EUROPÄISCHE PATENTSCHRIFT**

(45) Veröffentlichungstag und Bekanntmachung des Hinweises auf die Patenterteilung:
**11.12.2002 Patentblatt 2002/50**

(51) Int Cl.$^7$: **A01D 34/13**

(21) Anmeldenummer: **99110094.2**

(22) Anmeldetag: **22.05.1999**

(54) **Mähbalken**

Cutter bars

Barres de coupe

(84) Benannte Vertragsstaaten:
**AT CH FR GB IT LI NL**

(30) Priorität: **12.06.1998 DE 19826289**

(43) Veröffentlichungstag der Anmeldung:
**15.12.1999 Patentblatt 1999/50**

(73) Patentinhaber: **ESM ENNEPETALER SCHNEID-UND MÄHTECHNIK GMBH & CO. KG**
**D-58256 Ennepetal (DE)**

(72) Erfinder: **Schlasse, Manfred**
**58089 Hagen (DE)**

(74) Vertreter: **Patentanwälte Rehberg + Hüppe**
**Postfach 31 62**
**37021 Göttingen (DE)**

(56) Entgegenhaltungen:
**DE-A- 3 102 861**   **DE-A- 3 601 875**
**FR-A- 656 885**   **FR-A- 2 471 129**
**NL-A- 8 203 076**   **US-A- 4 380 889**

- **PATENT ABSTRACTS OF JAPAN vol. 014, no. 106 (C-0694), 27. Februar 1990 (1990-02-27) & JP 01 309615 A (KUBOTA LTD), 14. Dezember 1989 (1989-12-14)**

**Beschreibung**

Die Erfindung betrifft einen Mähbalken mit einem Obermesser und einem Untermesser, die jeweils einen Messerrücken und darauf angeordnete Schneidelemente aufweisen und bei denen das Obermesser und/oder das Untermesser hin- und hergehend angetrieben ist, wobei pro Längeneinheit die Anzahl der Schneidelemente des Obermessers ungleich der Anzahl der Schneidelemente des Untermessers ist.

Mähbalken dieser Art dienen dazu, Halmgüter wie Gras, Klee, Getreide, Gemüse und dgl. zu schneiden. Weitere Anwendungen sind der Schnitt von Hekken, die Straßenrandpflege und die Pflege von Sportanlagen. Ein spezielles Anwendungsgebiet des Mähbalkens stellt die Verwendung in einem Mähkorb dar. Dabei ist der Mähkorb samt Mähantrieb an dem einen Ende eines Auslegerarms eines Mähfahrzeugs so angeordnet, daß der Mähkorb auch in Gräben, Abhänge, Vertiefungen usw. verfahren werden kann, um diese zu mähen.

Ein Mähbalken der eingangs beschriebenen Art ist aus der Wartungsanleitung H 12/79 II 5000D der Busatis-Werke KG, 1979, bekannt. Bei diesem Mähbalken handelt es sich um einen Mähbalken nach dem sogenannten Mittelschnittprinzip, im Gegensatz zu dem Hochschnitt- oder Normalschnittprinzip. Beim Mittelschnittprinzip sind die Schneidelemente des Obermessers in der über die Länge konstanten Teilung $T_o = 76{,}2$ mm (3") und die Schneidelemente des Untermessers auf ihrem jeweiligen Messerrücken in der über die Länge konstanten Teilung $T_U = 50{,}8$ mm (2"), angeordnet. Es sind also festliegende gleichgroße Abständen zwischen den jeweiligen Schneidelementen vorgesehen, wobei die Teilung der Schneidelemente auf dem einen Messerrücken größer ist als die Teilung der Schneidelemente auf dem anderen Messerrücken. Durch diese Anordnung findet in jeder Relativlage des Obermessers zu dem Untermesser über die Länge des Mähbalkens eine Abstützung einiger Schneidelemente aneinander statt, d.h., daß die Schneidelemente sich teilweise überdekken bzw. teilweise übereinanderliegen. Durch die zwei unterschiedlich großen Teilungen von Obermesser einerseits und Untermesser andererseits gibt es in der Hubmittelstellung, d.h. der Mitte zwischen den beiden Umkehrpunkten des Antriebshubs, zwei unterschiedlich große Schneidlücken zwischen Schneidelementen des Obermessers und Schneidelementen des Untermessers. Um einen vollständigen Schnitt zu erzielen, muß sich der Hub an der größeren der beiden Schneidlücken orientieren, d.h der Hub muß dem Doppelten der größeren Schneidlücke in der Hubmittelstellung entsprechen.

Ein weiterer Mähbalken ist aus der DE-OS 31 02 861 bekannt. Es handelt sich um ein Doppelmesser-Schneidwerk, bei dem also sowohl das Obermesser wie auch das Untermesser angetrieben werden. Um eine hohe Schnittkraftspitze für die Messer abzubauen, sind die Schneidelemente des einen Messers mit einem um etwa 9 bis 12 % größeren Abstand auf dem Messerrücken angeordnet als die Schneidelemente des anderen Messers. So können die Schneidelemente des einen Messers mit der Teilung $T = 76{,}2$ mm (3") auf dem Messerrücken angeordnet sein, während die Teilung der Schneidelemente des Gegenmessers im Verhältnis 5 zu 6 kleiner ist.

Ein weiterer Mähbalken ist aus der DE-PS 1 196 412 bekannt. Der Mähbalken weist ein Obermesser mit Messerrücken und darauf angeordneten Schneidelementen und ein Untermesser mit Messerrücken und darauf angeordneten Schneidelementen auf, die mittels eines Antriebs mit zwei etwa gleich großen Hüben gegensinnig hin- und herbewegt werden. Das Obermesser und das Untermesser bewegen sich mit ihren Hüben so aufeinander zu, daß das zu schneidende Gut zwischen die Schneidelemente des Untermessers und des Obermessers gelangt und abgeschnitten wird. Es handelt handelt sich hierbei um einen Mähbalken nach dem Normalschnittoder Hochschnittprinzip. Beim Normalschnitt- oder Hochschnittprinzip sind die Schneidelemente des Obermessers und die Schneidelemente des Untermessers auf ihrem jeweiligen Messerrücken mit einer gleichgroßen, festen Teilung angeordnet. Die Schneidelemente des einen Messerrückens befinden sich in der Hubmittelstellung genau zwischen den Schneidelementen des anderen Messerrückens. In dieser Position ist die Überdeckung der Schneidelemente minimal, wodurch eine an einem Schneidelement angreifende Kraft keine Gegenkraft durch die Abstützung an einem anderen Schneidelements findet. Dies führt dazu, daß es leicht zu einem Verbiegen der Schneidelemente durch grobes Mähgut oder Steine kommt und somit eine Reduzierung der Schnittqualität resultiert.

Der Erfindung liegt die Aufgabe zugrunde, einen Mähbalken der eingangs beschriebenen Art bereitzustellen, der bei gleicher Mähbreite eine verringerte Antriebsleistung der Antriebseinheit benötigt bzw. bei gleicher Antriebsleistung der Antriebseinheit eine vergrößerte Mähbreite gestattet.

Erfindungsgemäß wird dies dadurch erreicht, daß die Schneidelemente des Obermessers oder des Untermessers mit mindestens zwei unterschiedlich großen Teilungen auf ihrem zugehörigen Messerrücken angeordnet sind.

Die Erfindung geht von dem Gedanken aus, die Schneidelemente des Obermessers oder des Untermessers nicht mehr äquidistant auf dem jeweiligen Messerrücken anzuordnen, sondern unterschiedlich große Teilungen vorzusehen. Aufgrund der Tatsache, daß beim Mittelschnittprinzip pro Längeneinheit die Anzahl der Schneidelemente des Obermessers ungleich der Anzahl der Schneidelemente des Untermessers ist, entstehen unterschiedlich große Schneidlücken zwischen den Schneidelementen des Obermessers und den Schneidelementen des Untermessers. Um einen vollständigen Schnitt des zu schneidenden Guts zu erreichen, müssen die Schneidlücken zwischen den Schneidelementen während des Hubs des Obermessers und/oder des Untermessers vollständig geschlossen werden. Dies bedeutet, daß sich der erforderliche Hub an der größten Schneidlücke orientiert, und zwar in der Weise, daß er dem Doppelten der maximalen Schneidlücke in der Hubmittelstellung, d.h. der Stellung in der Mitte des Hubs, entsprechen muß. Die unterschiedlich großen Teilungen der Schneidelemente des Obermessers oder des Untermessers bewirken nun, daß eine Angleichung der Größe der Schneidlücken aneinander stattfindet. Die größeren Schneidlücken werden zugunsten der kleineren Schneidlücken um einen in gewissen Grenzen wählbaren Betrag verkleinert. Folglich können der erforderliche Hub, das erforderliche Drehmoment und die erforderliche Antriebsleistung proportional reduziert werden. Dabei bleiben aber stets in jeder Relativstellung der Schneidelemente des Obermessers zu den Schneidelementen des Untermessers einige der Schneidelemente in Überdeckung, das heißt, daß sie so aufeinanderliegen, daß dem Eintauchen oder Verbiegen der Schneidelemente entgegengewirkt wird.

Die unterschiedlich großen Teilungen zwischen den Schneidelementen können in einem sich wiederholenden Intervall angeordnet sein. In dieser Weise können beliebig viele Intervalle hintereinander an dem Mähbalken angeordnet sein und somit die Länge des Mähbalkens beliebig gewählt werden. Das Intervall weist dabei vorzugsweise eine Länge auf, die einem ganzzahligen Vielfachen der mittleren Teilung zwischen den Schneidelementen entspricht. In jedem Intervall liegen somit die gleichen Verhältnisse vor, d. h. die gleichen Schneidlücken zwischen Schneidelementen des Obermessers und des Untermessers.

Die an beiden Rändern des Intervalls angeordneten Schneidelemente des Obermessers und des Untermessers können in der Hubmittelstellung des Antriebshubs mittig übereinanderliegen. Durch dieses mittige Übereinanderliegen ist in idealer Weise eine Abstützung der Schneidelemente des Obermessers an den Schneidelementen des Untermessers und umgekehrt realisiert.

In beiden Randbereichen des Intervalls können die benachbarten Schneidelemente des Obermessers oder des Untermessers mit den mindestens zwei unterschiedlich großen Teilungen in einer um das Maß X, Y, oder Z gegenüber der mittleren Teilung verkleinerten Teilung angeordnet sein. Um dieses Maß X, Y bzw. Z, bzw. ein Vielfaches davon, werden die unterschiedlich großen Schneidlücken zwischen den Schneidelementen des Obermessers und des Untermessers aneinander angeglichen und proportional der erforderliche Hub, das Drehmoment und die Antriebsleistung des Motors reduziert. Es ist überraschend, daß nur die den beiden Rändern zugekehrten benachbarten Schneidelemente verschoben angeordnet sind.

Im Intervall können zwei Schneidelemente des Obermessers mit der Teilung $T_O$ angeordnet sein, und im gleichen Intervall die Schneidelemente des Untermessers mit den Teilungen $(2/3)*T_O - X$; $(2/3)*T_O + 2*x$; $(2/3)*T_O - X$ angeordnet sein. Dies bedeutet, daß pro Intervall zwei Schneidelemente des Obermessers und drei Schneidelemente des Untermessers angeordnet sind. Die mittlere Teilung des Untermessers, die gleich zwei Drittel der Teilung $T_O$ des Obermessers entspricht, wird dabei um eine wählbare Größe X variiert. Dabei liegen zwei unterschiedlich große Teilungen vor, von denen die eine um X von der mittleren Teilung reduziert ist und zweimal in dem Intervall auftritt und von denen die andere um 2*X vergrößert ist. Das Intervall weist somit lediglich zwei unterschiedlich große Teilungen auf. Es befinden sich relativ viele der Schneidelemente in Überdeckung. Hierdurch ergibt sich eine gute Abstützung. Die Änderungen beziehen sich ausschließlich auf das Untermesser, so daß das Obermesser unverändert aus dem Stand der Technik verwandt werden kann.

Die Variablen X, Y und Z können in gewissen Bereichen gewählt werden. Dabei sind zwei Grenzbereiche zu beachten. Einerseits kann z.B. die Teilung $T_U$ - X bzw. $T_U$ - Y bzw. $T_U$ - Z der Schneidelemente des Untermesser nicht beliebig verkleinert werden, weil sonst ein Verstopfen der verkleinerten Schneidlücken droht. Andererseits kann z.B. die Teilung $T_U$ + 2X bzw. $T_U$ + Y bzw. $T_U$ + Z der Schneidelemente des Untermesser nicht beliebig vergrößert werden, weil dann zuviel Schnittgut in die vergrößerten Schneidlücken eintritt und dadurch die Schnittqualität nachläßt. Deshalb ergeben sich günstige Bereiche für

$$X = 6 \text{ bis } 12 \text{ \% von } T_U$$

$$Y = 10 \text{ bis } 20 \text{ \% von } T_U$$

$$Z = 8 \text{ bis } 16 \text{ \% von } T_U.$$

In der angegebenen Reihenfolge kann ein Einfachschneidelement, ein Doppelschneidelement und wieder ein Einfachschneidelement vorgesehen sein, die das sich wiederholende Intervall bilden. Die Schneidelemente können somit aneinander anschließend auf dem Messerrücken angeordnet werden. Dies hat den Vorteil, daß sie sich aneinander abstützen und somit die Belastung der Verbindungselemente zwischen Messerrücken und Schneidelementen verkleinert wird. Die Doppelschneidelemente weisen dabei zwischen ihren beiden Schneidelementen die Teilung $(2/3)*T_O + 2*X$, d. h. die größere der beiden Teilungen, auf. Die kleinere der beiden Teilungen ergibt sich aus dem Einfachschneidelement, das zwischen zwei Doppelschneidelementen angeordnet ist. Dabei ist von der Symmetrielinie oder Mittellinie des Einfachschneidelements aus gesehen nach beiden Seiten hin die kleinere Teilung vorgesehen. Die Einfachschneidelemente können in produktionstechnisch vorteilhafter Weise aus den Doppelschneidelementen hergestellt werden, indem diese unter Abtrennung des Betrages von 2*X vereinzelt werden. Für die Herstellung des Mähbalkens ist somit trotz der variierenden Teilung lediglich die Herstellung eines Ausgangs-Einzelteils notwendig. Es versteht sich, daß die Einzelschneidelemente ebenso unabhängig von den Doppelschneidelementen hergestellt werden können. Ebenso ist es möglich, die Schneidelemente nicht aneinanderstoßend auf dem Messerrücken anzuordnen, sondern mit Lücke zu montieren.

Im Intervall können drei Schneidelemente des Obermessers mit der Teilung $T_O$ angeordnet sein, und im gleichen Intervall die Schneidelemente des Untermessers mit den Teilungen $(3/4)*T_O - Y$; $(3/4)*T_O + Y$; $(3/4)*T_O + Y$; $(3/4)*T_O - Y$ angeordnet sein. Somit setzt sich ein Intervall aus zwei unterschiedlich großen Teilungen, nämlich einer um Y vergrößerten mittleren Teilung und einer um Y verkleinerten mittleren Teilung, zusammen, die in der Reihenfolge verkleinerte Teilung, vergrößerte Teilung, vergrößerte Teilung, verkleinerte Teilung im Intervall angeordnet sind. Ebenso ist ein Intervall mit fünf Bestandteilen möglich, bei dem drei unterschiedliche Teilungen vorhanden sind. Hierbei handelt es sich um eine mittlere Teilung, eine um Z vergrößerte mittlere Teilung und eine um Z verkleinerte mittlere Teilung. Diese sind in der Reihenfolge verkleinerte Teilung, vergrößerte Teilung, mittlere Teilung, vergrößerte Teilung, verkleinerte Teilung in dem Intervall angeordnet. Hieraus wird deutlich, daß es nicht auf das Verhältnis an sich ankommt, sondern auf die Tatsache, daß bei einigen der Schneidelemente der Abstand zwischen diesen um einen nahezu frei festlegbaren Betrag vergrößert und bei anderen die Teilung verkleinert wird.

Die Schneidelemente des Untermessers können Messerklingen oder Mähfinger sein. Die Messerklingen können dabei sowohl mit oder ohne angeschliffene Warte ausgebildet sein. Die Verwendung von Mähfingern bringt den Vorteil mit sich, daß diese aufgrund ihrer Geometrie besonders robust und damit für den Einsatz für ungleichmäßiges und grobes Mähgut geeignet sind.

Das Obermesser kann hin- und hergehend angetrieben und das Untermesser stillstehend vorgesehen sein. Damit kommen die angetriebenen Messer bei Bewegung des Mähbalkens über den Boden nicht mit diesem in Kontakt. Zusätzlich ist es konstruktiv einfacher lösbar, den Antrieb von oben an den Mähbalken heranzuführen, als dies von unten der Fall ist.

Der Mähbalken kann Teil eines Mähkorbs sein. Bei der Verwendung von Mähkörben steht nicht die absolute Schnittqualität im Vordergrund. Vielmehr ist es wichtig, einen verschleißarmen, robusten Mähbalken bereitzustellen, der auch grobes Mähgut schneiden kann. Der Mähkorb ist samt Mähantrieb an dem Ende eines Auslegearms eines Mähfahrzeugs so angeordnet, daß der Mähkorb auch in Gräben, Abhängen, Vertiefungen, unter Wasser usw. benutzt werden kann. Da der Antrieb des Mähkorbs ebenfalls am Ende des Auslegearms angeordnet ist, spielt die Masse des Antriebs eine entscheidende Rolle. Diese darf nicht zu groß werden, damit das auf das Mähfahrzeug aufgebracht Kippmoment aus Masse des Antriebs und Länge des Auslegearms eine zulässige Größe nicht übersteigt. Je kleiner der erforderliche Hub des Mähbalkens ist, desto kleiner ist auch die zur Erzeugung dieses Hubs notwendige Antriebsleistung des Mähantriebs. Wenn die erforderliche Antriebsleistung sinkt, kann ein leistungsschwächerer Mähantrieb mit geringerer Masse verwandt werden, so daß das Kippmoment kleiner wird. Diese relative Absenkung des Kippmoments kann dazu dazu genutzt werden, die Mähbreite des Mähbalkens zu erhöhen, was mit einer Vergrößerung des relativen Kippmoments des Mähbalkens einhergeht. Das absolute Kippmoment oder die Summe aller Kippmomente bleibt konstant. Dadurch kann in gleicher Zeit mehr Fläche gemäht werden. So kann die bisher übliche maximale Mähbreite von 5 m auf bis zu 6 m erhöht werden. Der erforderliche Hub kann um bis zu 20 % erniedrigt werden, was eine Reduzierung des erforderlichen Antriebs-Drehmoments und der erforderlichen Antriebsleistung in der gleichen Höhe bedeutet.

Die Erfindung wird anhand bevorzugter Ausführungsbeispiele weiter erläutert und beschrieben. Die Zeichnungen zeigen:

Fig. 1 eine schematische Ansicht eines Teils eines erfindungsgemäßen Mähbalkens in einer ersten Ausführungsform in Gegenüberstellung mit einem Mähbalken nach dem Mittelschnittprinzip gemäß Stand der Technik,

Fig. 2 eine schematische Ansicht des erfindungsgemäßen Mähbalkens in einer zweiten Ausführungsform in Gegenüberstellung mit einem Mähbalken analog dem Mittelschnittprinzip,

Fig. 3 eine schematische Ansicht des erfindungsgemäßen Mähbalkens in einer dritten Ausführungsform in Gegenüberstellung mit einem Mähbalken analog dem Mittelschnittprinzip,

Fig. 4 eine Detailansicht des erfindungsgemäßen Mähbalkens in der ersten mehr konstuktiven Ausführungsform gemäß Figur 1 und

Fig. 5 eine Detailansicht der Schneidelemente des Untermessers des erfindungsgemäßen Mähbalkens in der ersten Ausführungsform gemäß Figur 1.

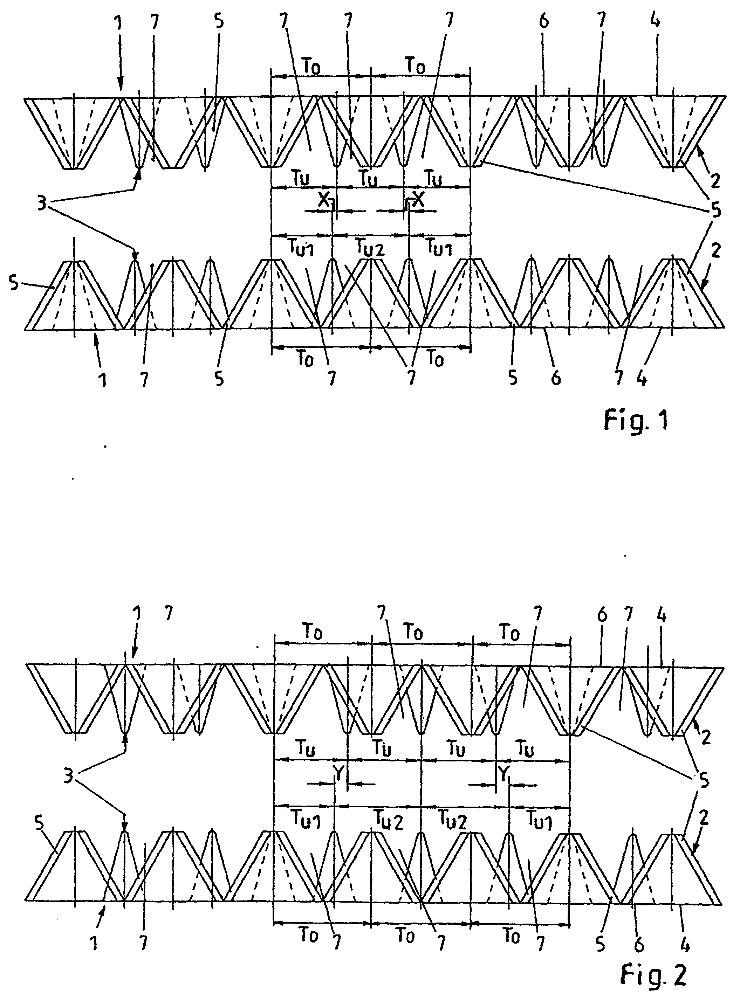

In Fig. 1 sind zwei Mähbalken 1 dargestellt, wobei es sich bei dem oberen Mähbalken 1 um einen Mähbalken nach dem Stand der Technik (Mittelschnittprinzip) und bei dem unteren Mähbalken 1 um einen erfindungsgemäßen Mähbalken 1 handelt. Anhand der geometrischen Gegenüberstellung der Verhältnisse an dem Mähbalken 1 nach dem Stand der Technik und an dem Mähbalken 1 gemäß der vorliegenden Erfindung kann die neue Ausbildung und die Wirkungsweise des Mähbalkens 1 anschaulich erläutert und beschrieben werden.

Der Mähbalken 1 in Fig. 1, oberer Teil, verwirklicht das sogenannte Mittelschnittprinzip. Der Mähbalken 1 weist ein Obermesser 2 und ein Untermesser 3 auf. Bei der dargestellten Relativstellung des Obermessers 2 zu dem Untermesser 3 handelt es sich um die Hubmittelstellung des Mähbalkens 1, d. h. die Stellung in der Mitte des Hubes, des hier nicht dargestellten Antriebs des Mähbalkens 1. Das Obermesser 2 weist einen hier nur schematisch dargestellten Messerrücken 4 und darauf angeordnete Schneidelemente 5 auf. Die Schneidelemente 5 des Obermessers 2 sind auf dem Messerrücken 4 mit einer über die gesamte Länge des Mähbalkens 1 gleichbleibend großen Teilung $T_o$ angeordnet. Das Untermesser 3 weist ebenfalls einen Messerrücken 6 auf, auf dem die Schneidelemente 5 mit einer ebenfalls gleichbleibend großen Teilung $T_U$ angeordnet sind. Über die gesamte Länge des Mähbalkens 1 sind die Schneidelemente 5 des Obermessers 2 und des Untermessers 3 in einem sich wiederholenden Intervall angeordnet. Pro Intervall ist hier zweimal die Teilung $T_o$ an dem Obermesser 2 und dreimal die Teilung $T_U$ an dem Untermesser vorgesehen. Das bedeutet, daß das Verhältnis zwischen der Anzahl der Schneidelemente 5 des Obermessers und der Anzahl der Schneidelemente 5 des Untermessers 2 zu 3 beträgt. Durch diese Anordnung ergeben sich notwendigerweise unterschiedlich große bzw. breite Schneidlücken 7 zwischen den Schneidelementen 5 des Obermessers 2 und den Schneidelementen 5 des Untermessers 3. Es ist erkennbar, daß es hier genau zwei unterschiedlich große Schneidlücken 7 gibt. Die größere der beiden Schneidlücken 7 entspricht in etwa der Teilung $T_U$ des Untermessers 3, d.h. sie ist geringfügig kleiner als die Teilung $T_U$. Beim Schneidvorgang des Mähbalkens 1 wird das Obermesser 2 hin- und hergehend angetrieben. Um einen vollständigen Schnitt erzielen zu können, müssen die Schneidlücken 7 während des Schneidvorgangs vollständig geschlossen werden. Hierzu ist, ausgehend von der dargestellten Hubmittelstellung des Mähbalkens 1, eine Bewegung des Obermessers 2 erforderlich, die in etwa dem Doppelten der Teilung $T_U$ des Untermessers 3 entspricht. Hieraus ergibt sich der erforderliche Hub des Antriebes des Mähbalkens 1. Ein typische Wert für die Teilung Teilung $T_o$ des Obermesser 2 ist 76,2 mm (3") und 50,8 mm (2") für die Teilung $T_U$ des Untermessers 3.

Bei dem im unteren Bereich von Figur 1 dargestellten erfindungsgemäßen Mähbalken 1 sind die Schneidelemente 5 des Obermessers 2 in gleicher Weise wie im Stand der Technik angeordnet, d. h. es liegt hier ebenfalls die konstante Teilung $T_o$ zweimal pro Intervall vor. Am Obermesser 2 wurden somit gegenüber dem Stand der Technik keine Änderungen vorgenommen, so daß ein Obermesser 2 aus dem Stand der Technik in dem erfindungsgemäßen Mähbalken 1 Verwendung finden kann. Andere Verhältnisse liegen jedoch bei dem Untermesser 3 vor. Die Schneidelemente 5 des Untermessers 3 sind auf dem Messerrücken 6 mit zwei unterschiedlich großen Teilungen angeordnet. Innerhalb des sich über die Länge des Mähbalkens 1 wiederholenden Intervalls ist je zweimal die Teilung $T_{U1}$ und einmal die Teilung $T_{U2}$ vorgesehen. Dabei wurde gegenüber dem Stand der Technik die Teilung $T_U$ um den Wert X verändert. Dabei gelten folgende Gleichungen:

$$T_{U1} = T_U - X$$

$$T_{U2} = T_U + 2X.$$

Dabei sind im Intervall die Teilungen des Untermessers 3 in der Reihenfolge $T_{U1}$, $T_{U2}$, $T_{U1}$ angeordnet. Innerhalb eines Intervalls gleichen sich somit die durchgeführten Verschiebungen um den Betrag X bzw. 2X der Schneidelemente 5 des Untermessers 3 aus, so daß über die gesamte Länge des Mähbalkens 1 an sich entsprechenden Schneidelementen 5 sich entsprechende Verhältnisse vorliegen. Durch die Maßnahme des relativen Verschiebens der Schneidelemente 5 des Untermessers 3 wurden die unterschiedlich großen Schneidlücken 7 zwischen den Schneidelementen 5 des Obermessers 2 und den Schneidelementen 5 des Untermessers 3 aneinander angeglichen. Die größeren Schneidlücken 7 wurden dabei um den Wert X verkleinert und die kleineren Schneidlücken 7 um den Wert X vergrößert. Daraus folgt, daß der zum vollständigen Schneiden erforderliche Hub ebenfalls verkleinert wurde, und zwar um 2*X. Dadurch wird das erforderliche Drehmoment und die erforderliche Antriebsleistung des Motors ebenfalls um 2*X verkleinert. Ausgehend von dem Stand der Technik, d.h. von einem typischen Wert für die Teilung Teilung $T_o$ des Obermesser 2 von 76,2 mm (3") und von 50,8 mm (2") für die Teilung $T_U$ des Untermessers 3 kann der Hub des Antriebs um etwa 10 bis 20 % verkleinert werden.

Hierbei ist sowohl eine Ausführungsform mit einem angetriebenen Obermesser 2 und einem stillstehenden Untermesser 3, eine Ausführungsform im Sinne eines Doppelschneidwerks mit angetriebenem Obermesser 2 und angetriebenem Untermesser 3, als auch eine Ausführungsform mit einem angetriebenen Untermesser 3 und einem stillstehenden Obermesser 2 möglich. Die bevorzugte Ausführungsform ist die mit einem angetriebenen Obermesser 2 und einem stillstehenden Untermesser 3.

In Fig. 2 sind wiederum oben ein Mähbalken 1 analog dem Mittelschnittprinzip (nicht Stand der Technik) und unten ein erfindungsgemäßer Mähbalken 1 in Gegenüberstellung dargestellt. Im Unterschied zu Fig.

1 ist beim Mähbalken 1 des Standes der Technik pro Intervall dreimal die Teilung $T_o$ des Obermessers 2 und viermal die Teilung $T_U$ des Untermessers 3 vorgesehen. Hierdurch ergeben sich wiederum unterschiedlich große Schneidlücken 7 zwischen den Schneidelementen 5 des Obermessers 2 und des Untermessers 3, die in einem anderen Verhältnis (jetzt 3 zu 4) als die Schneidlücken 7 der in Fig. 1 dargestellten Ausführungsform (dort 2 zu 3) zueinander stehen.

Beim im unteren Bereich von Figur 2 dargestellten erfindungsgemäßen Mähbalken 1 wurde nun eine Verschiebung um die Variable Y durchgeführt. Hierbei gelten folgende Gleichungen:

$$T_{U1} = T_U - Y$$

$$T_{U2} = T_U + Y.$$

Dabei sind im Intervall die Teilungen des Untermessers 3 in der Reihenfolge $T_{U1}$, $T_{U2}$, $T_{U2}$, $T_{U1}$ angeordnet. Die randseitigen Schneidelemente 5 des Untermessers 3 sind also gleichsam um die Variable Y verschoben angeordnet. Damit sind die maximalen Schneidlücken 7 verkleinert und die anderern Schneidlücken 7 vergrößert.

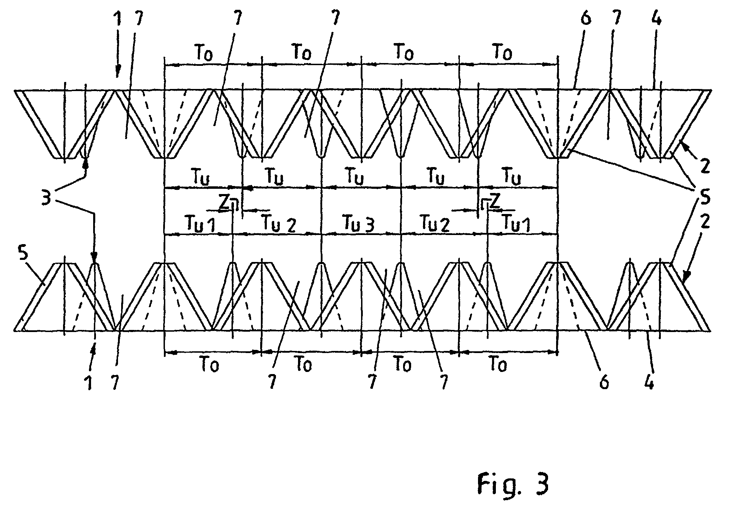

In Fig. 3 oben weist der Mähbalken 1 analog dem Mittelschnittprinzip (nicht Stand der Technik) pro Intervall viermal die Teilung $T_o$ des Obermessers 2 und fünfmal die Teilung $T_U$ des Untermessers 3 auf. Hierdurch ergeben sich wiederum unterschiedlich große Schneidlücken 7, die von den Schneidlücken in den vorangegangenen Ausführungsformen abweichen. Die Schneidelemente 5 des Untermessers 3 wurden um die Variable Z verschoben. Es gelten folgende Gleichungen:

$$T_{U1} = T_U - Z$$

$$T_{U2} = T_U + Z$$

$$T_{U3} = T_U.$$

Dabei sind pro Intervall die Teilungen des Untermessers 3 in der Reihenfolge $T_{U1}$, $T_{U2}$, $T_{U3}$, $T_{U2}$, $T_{U1}$ angeordnet.

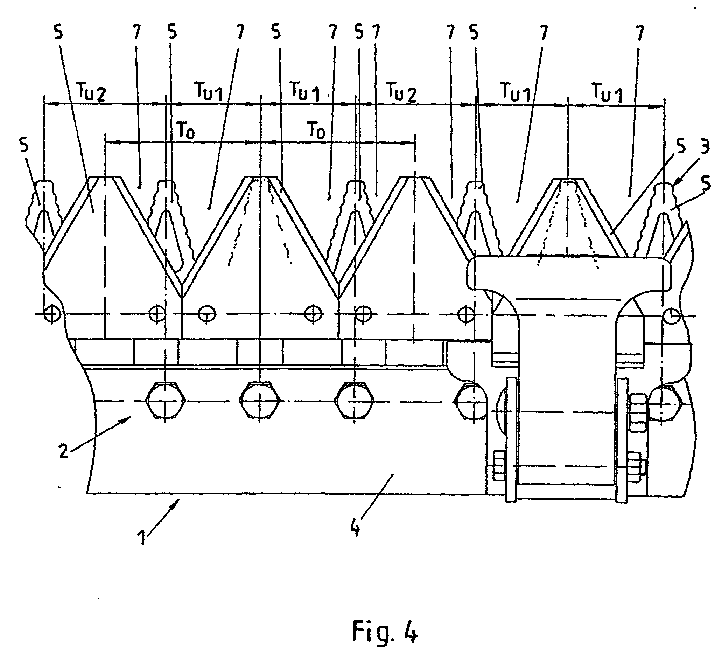

In Fig. 4 ist der erfindungsgemäße Mähbalken 1 in der Fig. 1 gemäßen Ausführungsform detailliert dargestellt. Dabei sind insbesondere Details des Messerrückens 4 des Obermessers 2 dargestellt. Bei den Schneidelementen 5 des Obermessers 2 handelt es sich um Einfachklingen mit angeschliffener Warte, während es sich bei den Schneidelementen 5 des Untermessers 3 um Mähfinger handelt. Der Antrieb greift an dem Obermesser 2 an, das gegenüber dem stillstehenden Untermesser 3 angetrieben ist.

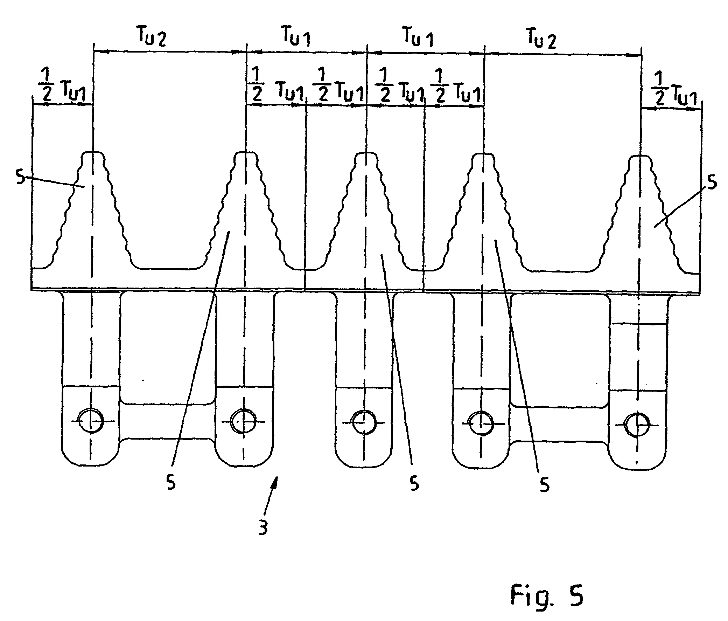

In Fig. 5 ist ein Detail des erfindungsgemäßen Mähbalkens gemäß Fig. 1 dargestellt. Das Untermesser 3 weist als Schneidelemente 5 Mähfinger auf, die abwechselnd als Doppelmähfinger und Einfachmähfinger auf dem nicht dargestellten Messerrücken angeordnet sind. Die Doppelmähfinger weisen dabei eine Teilung $T_{U2}$ auf, während zwischen den Doppelmähfingern und den Einzelmähfingern eine Teilung $T_{U1}$ vorgesehen ist. Dabei ist der Abstand von der vertikalen Mittellinie eines Einzelmähfingers zu seiner an den Doppelmähfinger anstoßenden Kante gleich ½ $T_{U1}$, so daß folglich zur Ausbildung des Intervalls die Doppelmähfinger und Einzelmähfinger aneinander anschließend angeordnet werden können. Die Einzelmähfinger können dabei beispielsweise aus Doppelmähfingern hergestellt werden, wobei folgende Gleichungen gelten:

$$(1) \qquad T_{U1} = T_U - X$$

$$(2) \qquad T_{U2} = T_U + 2X.$$

## BEZUGSZEICHENLISTE

1 - Mähbalken
2 - Obermesser
3 - Untermesser
4 - Messerrücken
5 - Schneidelement
6 - Messerrücken
7 - Schneidlücke

## Patentansprüche

1. Mähbalken (1) mit einem Obermesser (2) und einem Untermesser (3), die jeweils einen Messerrücken (4, 6) und darauf angeordnete Schneidelemente (5) aufweisen und bei denen das Obermesser (2) und/oder das Untermesser (3) hin- und hergehend angetrieben ist, wobei pro Längeneinheit die Anzahl der Schneidelemente (5) des Obermessers (2) ungleich der Anzahl der Schneidelemente (5) des Untermessers (3) ist, **dadurch gekennzeichnet, daß** die Schneidelemente (5) des Obermessers (2) oder des Untermessers (3) mit mindestens zwei unterschiedlich großen Teilungen auf ihrem zugehörigen Messerrücken (4, 6) angeordnet sind.

2. Mähbalken nach Anspruch 1, **dadurch gekennzeichnet, daß** die unterschiedlich großen Teilungen zwischen den Schneidelementen (5) in einem sich wiederholenden Intervall angeordnet sind.

3. Mähbalken nach Anspruch 2, **dadurch gekennzeichnet, daß** das Intervall eine Länge aufweist, die einem ganzzahligen Vielfachen der mittleren Teilung zwischen den Schneidelementen (5) entspricht.

4. Mähbalken nach Anspruch 3, **dadurch gekennzeichnet, daß** die an beiden Rändern des Intervalls angeordneten Schneidelemente (5) des Obermessers (2) und des Untermessers (3) in der Hubmittelstellung des Antriebshubs mittig übereinanderliegen.

5. Mähbalken nach Anspruch 4, **dadurch gekennzeichnet, daß** in beiden Randbereichen des Intervalls die benachbarten Schneidelemente (5) des Obermessers (2) oder des Untermessers (3) mit den mindestens zwei unterschiedlich großen Teilungen in einer um das Maß X, Y, oder Z gegenüber der mittleren Teilung verkleinerten Teilung angeordnet sind.

6. Mähbalken nach einem der Ansprüche 1 bis 5, **dadurch gekennzeichnet, daß** im Intervall zwei Schneidelemente (5) des Obermessers (2) mit der Teilung $T_O$ angeordnet sind, und daß im gleichen Intervall die Schneidelemente (5) des Untermessers (3) mit den Teilungen $(2/3)*T_O - X$; $(2/3)*T_O + 2*X$; $(2/3)*T_O - X$ angeordnet sind.

7. Mähbalken nach Anspruch 6, **dadurch gekennzeichnet, daß** in der angegebenen Reihenfolge ein Einfachschneidelement, ein Doppelschneidelement und wieder ein Einfachschneidelement vorgesehen sind, die das sich wiederholende Intervall bilden.

8. Mähbalken nach einem der Ansprüche 1 bis 5, **dadurch gekennzeichnet, daß** im Intervall drei Schneidelemente (5) des Obermessers (2) mit der Teilung $T_O$ angeordnet sind, und daß im gleichen Intervall die Schneidelemente (5) des Untermessers (3) mit den Teilungen $(3/4)*T_O - Y$; $(3/4)*T_O + Y$; $(3/4)*T_O + Y$; $(3/4)*T_O - Y$ angeordnet sind.

9. Mähbalken nach Anspruch 1, **dadurch gekennzeichnet, daß** die Schneidelemente (5) des Untermessers (3) Messerklingen oder Mähfinger sind.

10. Mähbalken nach einem der Ansprüche 1 bis 9, **dadurch gekennzeichnet, daß** das Obermesser (2) hin- und hergehend angetrieben und das Untermesser (3) stillstehend vorgesehen ist.

11. Mähbalken nach einem der Ansprüche 1 bis 10, **dadurch gekennzeichnet, daß** der Mähbalken (1) Teil eines Mähkorbs ist.

**Claims**

1. A cutter bar (1) with an upper blade (2) and a lower blade (3) each including a blade back (4, 6) and cutting elements (5) being arranged thereon and in which the upper blade (2) and/or the lower blade (3) are driven to reciprocate, the number of cutting elements (5) of the upper blade (2) being different from the number of cutting elements (5) of the lower blade (3) per unit of length, **characterised in that** the cutting elements (5) of the upper blade (2) or of the lower blade (3) are arranged on their respective blade back (4, 6) at at least two differently sized divisions.

2. The cutter bar of claim 1, **characterised in that** the differently sized divisions between the cutting elements (5) are arranged in a repeating interval.

3. The cutter bar of claim 2, **characterised in that** the interval has a length corresponding to an integral multiple of the average division between the cutting elements (5).

4. The cutter bar of claim 3, **characterised in that** the cutting elements (5) of the upper blade (2) and of the lower blade (3) being arranged at both edges of the interval centrically cover in the stroke middle position of the driving stroke.

5. The cutter bar of claim 4, **characterised in that** in both edge portions of the interval the adjacent cutting elements (5) of the upper blade (2) or of the lower blade (3) with the at least two differently sized divisions are arranged at a division being decreased with respect to the average division by the value X, Y or Z.

6. The cutter bar of at least one of claims 1 to 5, **characterised in that** two cutting elements (5) of the upper blade (2) are arranged in the interval with the division $T_O$, and that the cutting elements (5) of the lower blade (3) are arranged in the same interval with the divisions $(2/3) * T_O - X$; $(2/3) * T_O + 2 * X$; $(2/3) * T_O - X$.

7. The cutter bar of claim 6, **characterised in that** a single cutting element, a double cutting element and another single cutting element are provided in this order, the cutting elements forming the repeating interval.

8. The cutter bar of at least one of claims 1 to 5, **characterised in that** three cutting elements (5) of the upper blade (2) having the division $T_O$ are arranged in the interval, and that the cutting elements (5) of the lower blade (3) with the divisions $(3/4) * T_O - Y$; $(3/4) * T_O + Y$; $(3/4) * T_O + Y$; $(3/4) * T_O - Y$ are arranged in the same interval.

9. The cutter bar of claim 1, **characterised in that** the cutting elements (5) of the lower blade (3) are knife blades or cutting fingers.

10. The cutter bar of at least one of claims 1 to 9, **characterised in that** the upper blade (2) is provided to be driven reciprocately and that the lower blade (3) is provided to be stationary.

11. The cutter blade of at least one of claims 1 to 10, **characterised in that** the cutter blade (1) is part of a cutter basket.

## Revendications

1. Barre de coupe (1) avec un couteau supérieur (2) et un couteau inférieur (3) qui comportent chacune un dos de couteau (4, 6) et des éléments de coupe (5) disposés sur celui-ci, et dans lesquels le couteau supérieur (2) et/ou le couteau inférieur (3) est entraîné en sens alternés, le nombre d'éléments de coupe (5) du couteau supérieur (2) par unité de longueur étant différent du nombre d'éléments de coupe (5) du couteau inférieur (3), **caractérisée en ce que** les éléments de coupe (5) du couteau supérieur (2) ou du couteau inférieur (3) sont disposés sur leur dos de couteau (4, 6) correspondant avec au moins deux divisions de grandeurs différentes.

2. Barre de coupe selon la revendication 1, **caractérisée en ce que** les divisions différentes entre les éléments de coupe (5) sont disposées en un intervalle se répétant.

3. Barre de coupe selon la revendication 2, **caractérisée en ce que** l'intervalle présente une longueur qui correspond à un multiple entier de la division moyenne entre les éléments de coupe (5).

4. Barre de coupe selon la revendication 3, **caractérisée en ce que** les éléments de coupe (5), disposés sur les deux bords de l'intervalle, du couteau supérieur (2) et du couteau inférieur (3), se superposent au milieu dans la position centrale de la course d'entraînement.

5. Barre de coupe selon la revendication 4, **caractérisée en ce que** dans les deux zones de bordure de l'intervalle, les éléments de coupe (5) voisins du couteau supérieur (2) ou du couteau inférieur (3) avec les divisions de grandeurs différentes, au moins au nombre de deux, sont disposés suivant une division réduite de la mesure (X, Y ou Z) par rapport à la division moyenne.

6. Barre de coupe selon l'une des revendications 1 à 5, **caractérisée en ce que** dans l'intervalle sont disposés deux éléments de coupe (5) du couteau supérieur (2) avec la division ($T_0$) et **en ce que** dans le même intervalle, les éléments de coupe (5) du couteau inférieur (3) sont disposés avec les divisions $(2/3)*T_0 - X$ ; $(2/3)*T_0 + 2*X$ ; $(2/3)*T_0 - X$.

7. Barre de coupe selon la revendication 6, **caractérisée en ce que** dans la succession indiquée, sont prévus un élément de coupe simple, un élément de coupe double et à nouveau un élément de coupe simple qui forment l'intervalle se répétant.

8. Barre de coupe selon l'une des revendications 1 à 5, **caractérisée en ce que** dans l'intervalle sont disposés trois éléments de coupe (5) du couteau supérieur (2) avec la division ($T_0$), et **en ce que** dans le même intervalle, sont disposés les éléments de coupe (5) du couteau inférieur (3) avec les divisions $(3/4)*T_0 - Y$ ; $(3/4)*T_0 + Y$ ; $(3/4)*T_0 + Y$ ; $(3/4)*T_0 - Y$.

9. Barre de coupe selon la revendication 1, **caractérisée en ce que** les éléments de coupe (5) du couteau inférieur (3) sont des lames de couteau ou des doigts de coupe.

10. Barre de coupe selon l'une des revendications 1 à 9, **caractérisée en ce que** le couteau supérieur (2) est entraîné en sens alternés et le couteau inférieur (3) est prévu à l'arrêt.

11. Barre de coupe selon l'une des revendications 1 à 10, **caractérisée en ce que** la barre de coupe (1) fait partie d'une corbeille de moissonneuse.

Fig. 1

Fig. 2

Fig. 3

Fig. 4

Fig. 5